# EUROPÄISCHE PATENTSCHRIFT

(11) **EP 0 557 566 B1**
(45) Veröffentlichungstag und Bekanntmachung des Hinweises auf die Patenterteilung: **17.04.1996**
(21) Anmeldenummer: 92103482.3
(22) Anmeldetag: 28.02.1992
(51) Int. Cl.: H04Q 11/04, H04Q 3/545, H04M 3/42

(54) **Verfahren zur hierarchisch administrierbaren kennungsorientierten Freigabesteuerung für bedieneraufgabenbezogene Zugriffsanweisungen auf eine Datenbasis einer programmgesteuerten Kommunikationsanlage**
Method for hierarchical managed password oriented access control to user access indications in a database of an SPS exchange
Méthode d'accès par mot de passe administré hiérarchiquement aux indications d'accès d'utilisateur dans une base de données d'un central à commande programmée

(43) Veröffentlichungstag der Anmeldung: 01.09.1993
(73) Patentinhaber: SIEMENS AKTIENGESELLSCHAFT, D-80333 München (DE)
(72) Erfinder: Wöss, Friedrich, Dipl.-Ing., W-8156 Otterfing (DE); Mages, Josef, W-8423 Abensberg (DE)

(56) Entgegenhaltungen:
- US-A- 4 959 856
- US-A- 5 003 595
- INT. CONF. ON COMMUNICATIONS '88, SESSION 35, PAPER 2 Bd. 2, 12. Juni 1988,PHILADELPHIA US Seiten 1-7 J.G.BRINSFIELD
- INT. SWITCHING SYMP. 1990, SESSION B10, PAPER #3 Bd. 6, 28. Mai 1990, STOCKHOLM SE Seiten 125 - 130 K. PRESTTUN ET AL.

## Beschreibung

Programmgesteuerte Kommunikationsanlagen dienen in Kommunikationssystemen zur Verbindung von Endgeräten untereinander und zur Verbindung dieser Endgeräte mit Kommunikationsnetzen.

Die Vielfalt bekannter Kommunikationssysteme reicht von einfachen Telefonsystemen für die ausschließliche Übertragung von Sprache bis hin zu komplexen ISDN-Kommunikationssystemen (Integrated Services Digital Network) mit simultaner Mehrfach- oder auch Mischkommunikation von Sprache, Text, Bild und Daten.

An die Kommunikationsanlage im ISDN-Kommunikationssystem sind Endgeräte mit vielfältigen Leistungensmerkmalen anschließbar - von analogen und digitalen Telefonen, Fernkopierern, multifunktionalen Terminals, Arbeitsplatzsystemen, Personalcomputern, Teletext- und Bildschirmtextstationen, bis hin zu Datenterminals.

Aus einer Sonderausgabe von "Telcom report" - ISDN im Büro - 1985, ISBN 3-8009-3846-4, Siemens Aktiengesellschaft, ist ein derartiges Kommunikationssystem bekannt.

Die solchen Kommunikationssystemen zugrundeliegende Kommunikationsanlage ist modular aufgebaut und stellt im Prinzip eine digitale Datenverarbeitungsanlage mit einer Vielzahl von Peripherieeinheiten dar.

Zur Ausführung spezieller Dienste und Aufgaben sind im Rahmen eines sogenannten Server-Konzeptes modulare Einheiten - Server - vorgesehen, die mit eigener "Intelligenz" diese speziellen Aufgaben übernehmen.

So werden mit einem sogenannten Betriebs- und Datenserver zum Beispiel Leistungsmerkmale für ein elektronisches Datenbuch, für Funktionen zur Datenerfassung, Datenbearbeitung und Datentransport, sowie zur Durchführung von Steuerungsaufträgen angeschlossener Rechner, zur Verfügung gestellt.

Ein sogenannter Sprachinformationsserver bietet den angeschlossenen Teilnehmern die Möglichkeit, ihren Telefonanschluß auf persönliche Sprachpostfächer umzuleiten.

Ein Text- und Faxserver bietet unter anderem Leistungsmerkmale an, die eine Umsetzung von Teletext auf Telefax durchführen, wenn beim Empfänger kein telefaxfähiges Endgerät vorhanden ist.

Jeder dieser Server kann im Prinzip als eine für sich eigenständige Datenverarbeitungseinrichtung angesehen werden, die programmtechnisch und auch 'Hardware'-mäßig mit einer ebenfalls rechnergesteuerten Durchschalteeinheit der Kommunikationsanlage verbunden ist. An die Durchschalteeinheit, die gewissermaßen das Basismodul der Kommunikationsanlage bildet, sind die Endgeräte angeschlossen.

Der programmtechnische Teil der Kommunikationsanlage, allgemein mit System-Software bezeichnet, ist aufgaben- bzw. funktionsorientiert in eine Vermittlungstechnik-, eine Sicherheitstechnik- und eine Betriebstechnik-Software gegliedert. Zu jedem dieser Software-Module gehört in der Durchschalteeinheit sowie in den Servern jeweils eine Vielzahl von funktionsbezogenen Programm-Modulen, deren Abarbeitung in Form sogenannter 'Tasken' von einem Betriebssystem koordiniert werden.

Innerhalb der Vermittlungs-Software, die sich in die Funktionskomplexe Peripherietechnik, Leitungstechnik und Vermittlungstechnik unterteilen läßt, führt die Peripherietechnik im wesentlichen Daten- und Informations-Transportfunktionen aus.

Die Leitungstechnik hat die Aufgabe, die Schnittstelle zur Peripherietechnik an die ISDN-Schnittstelle zur Vermittlungstechnik anzupassen.

Die Vermittlungstechnik erbringt die eigentlichen Leistungen für die Benutzeroberfläche der Endgeräte bzw. für die Schnittstellen zu den verschiedenen Netzen.

Die Sicherheits-Software sammelt auftretende Fehlersignale aus Soft- und Hardware-Komplexen und veranlaßt die erforderlichen Schritte um Fehler zu beheben, fehlerhafte Funktionskomplexe durch andere zu ersetzen und entsprechende Fehlermeldungen auf einem Betriebsterminal zur Anzeige zu bringen.

Unter Betriebstechnik ist die Verwaltungs- und Wartungs-Software der Kommunikationsanlage zu verstehen, die dafür vorgesehen ist, um das Inbetriebssetzen und Inbetriebhalten sowie das Steuern des gesamten Kommunikationssystems zu ermöglichen. Dazu zählt auch das Laden von Programmen in die Kommunikationsanlage, das Verteilen und Starten dieser Programme in den verschiedenen Systemeinheiten, das Aktivieren und Deaktivieren von Systemfunktionen sowie das Erfassen und Archivieren aller betrieblichen Veränderungen des Gesamtsystems.

Die Betriebstechnik stellt gewissermaßen eine Schnittstelle zur Funktioneneinstellung einer programmgesteuerten Kommunikationsanlage dar. Um diese Schnittstelle im Sinne einer Bedienerfreundlichkeit unkompliziert und möglichst komfortabel auszugestalten, werden von der Kommunikationsanlage eine Vielzahl von Applikationsprogrammen zur Verfügung gestellt, die im wesentlichen dazu dienen, um nach Bedieneraufgaben formulierte Funktionsanweisungen in für die Betriebstechnik der Kommunikationsanlage verständliche betriebstechnische Einzelanweisungen umzusetzen. Die betriebstechnischen Einzelanweisungen sind nach vermittlungstechnischen Gesichtspunkten strukturiert und stellen gewissermaßen das Grundgerüst zur Einflußnahme auf die Kommunikationsanlage dar.

Der Großteil der vorgesehenen betriebstechnischen Einzelanweisungen beeinflußt unmittelbar die in einer Datenbasis einer programmgesteuerten Anlage hinterlegten betriebstechnikbezogenen Informationen, die das Verhalten und die Funktionsweise der Kommunikationsanlage, z. B. gegenüber den einzelnen Kommunikationsteilnehmern, festlegen.

Aufgrund der nahezu unbegrenzten Einflußmöglichkeiten, die mit der Betriebstechnik-Schnittstelle zur Verfügung stehen und die insbesondere auch Zugriffe auf in eine ISDN-Kommunikationsanlage zwischenspeicherbare kommunikationsteilnehmerindividuelle Daten erlauben, darf die Betriebstechnik-Schnittstelle nur berechtigten Benutzern zugänglich sein.

Üblicherweise (siehe z.B. die US-A-4 959 856) wird den berechtigten Benutzern jeweils ein Kennungscodewort mitgeteilt, das durch eine individuelles Paßwort ergänzt werden kann und in einen von den Benutzern nicht lesbaren Speicherbereich der datenverarbeitenden Einrichtung eingetragen wird. In den meisten Fällen werden diese Eintragungen von einem bereits berechtigten Benutzer oder vom Kundendienst-Personal der Herstellerfirma ausgeführt. Als Kennungscodeworte und Paßworte werden alphanumerische Zeichenfolgen verwendet.

In der Regel hat damit jeder Berechtigte die absolute Zugriffsberechtigung zum gesamten System. In vielen Fällen wirkt sich diese Tatsache nicht weiter störend aus, insbesondere dann nicht, wenn Eingriffe in die Betriebstechnik der Kommunikationsanlage äußerst selten anfallen, und keine schützenswerten Daten in der Kommunikationsanlage gespeichert werden. Dagegen genügt diese herkömmliche Art der undifferenzierten Vergabe von Zugangsberechtigungen nicht den Anforderungen solcher Anlagenbetreiber, die über die Betriebstechnik in ihrer Kommunikationsanlage häufig Änderungen vornehmen müssen, oder ihre Kommunikationsanlage auch als Datenverarbeitungseinrichtung im herkömmlichen Sinne benutzen.

Aufgabe der vorliegenden Erfindung ist es, für die Vergabe von Zugriffsberechtigungen ein Verfahren anzugeben, mit dem es einerseits möglich ist, eine äußerst komplexe Verteilung und Differenzierung der Zugriffsberechtigungen vorzugeben, das andererseits aber auch für solche Benutzer, deren Anforderungen bezüglich der Vergabe von Zugriffsberechtigungen gering sind, keinen Aufwand erfordert.

Gelöst wird diese Aufgabe erfindungsgemäß durch die Merkmale des Patentanspruchs 1.

Der wesentliche Vorteil des erfindungsgemäßen Verfahrens ist in seiner Flexibilität und in der Individualität zu sehen, wie den Sicherheitsbedürfnissen eines jeweiligen Anlagenbetreibers auf einfache Weise entsprochen werden kann. Da das erfindungsgemäße Verfahren unterschiedliche Aufgaben- und Funktionskomplexe mit individuellen Sicherheitsaspekten berücksichtigt, lassen sich auch mehrere im Prinzip voneinander unabhängige Funktionseinheiten gemeinsam durch ein Verfahren sicherheitstechnisch verwalten.

Vorteilhafte Weiterbildungen der Erfindung sind in den Unteransprüchen angegeben.

Zum detaillierten Verständnis der Erfindung und ihrer Weiterbildungen, insbesondere zur Darlegung weiterer vorteilhafter Aspekte wird im folgenden ein Ausführungsbeispiel der Erfindung anhand der Zeichnung näher beschrieben.

Dabei zeigen:
- FIG 1: in schematischer Blockdarstellung eines bekannten ISDNKommunikationssystems im Zusammenhang mit Peripheriegeräten,
- FIG 2: ein Schalenmodell zur Darstellung der Software-Architektur der bekannten Kommunikationsanlage,
- FIG 3: ein auf einem Betriebsterminal zur Anzeige kommendes Hauptverzeichnis von bedieneraufgabenbezogenen Zugriffsanweisungen,
- FIG 4: ein Beispiel für eine Zuordnung von Zugriffsanweisungen zu Zugriffsklassen,
- FIG 5: eine Auflistung von zur Administration vorgesehenen Funktionsfreigaben, und
- FIG 6: ein Beispiel für die in einer Benutzerkennungstabelle und Benutzerprofiltabelle vermerkten Einträge.

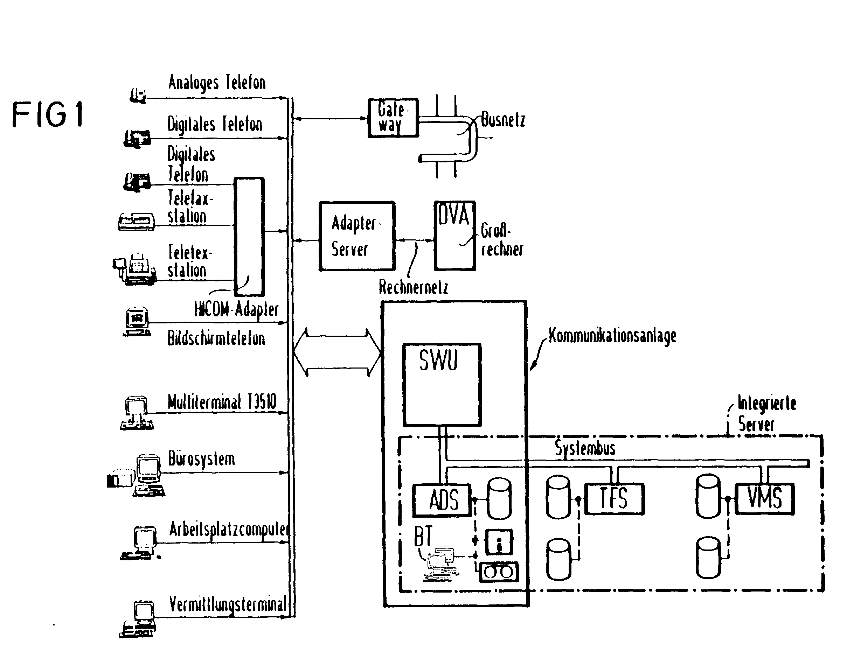

In FIG 1 ist eine bekannte Kommunikationsanlage zusammen mit einer Vielzahl von anschließbaren Geräten schematisch dargestellt. Wesentliche Bestandteile der Kommunikationsanlage sind eine Durchschalteeinheit SWU und eine Betriebs-Datenservereinheit ADS. Diese beiden Einheiten sind ergänzt durch eine Sprachinformations-Servereinheit VMS und eine Text-, Faxservereinheit TFS.

Prinzipiell sind diese Einheiten SWU, ADS, VMS, TFS als reine Software-Module aufzufassen, d. h. , daß die gewählte Darstellung nicht an eine bestimmte Art und Verteilung der verwendeten Hardware gebunden ist. Insbesondere kann der Durchschalteeinheit SWU und der Betriebs-Datenservereinheit ADS dieselbe Prozessoreinrichtung zugeordnet sein.

In einer Minimalkonfiguration setzt sich die Kommunikationsanlage funktional nur aus der Durchschalteeinheit SWU für die Durchschaltevermittlungsfunktionen und der Betriebs-Datenservereinheit ADS für die Speichervermittlungsfunktionen zusammen. Sämtliche Einheiten sind im Sinne eines Zusammenwirkens über einen Systembus miteinander verbunden.

Gegenüber der Durchschalteeinheit SWU, die im wesentlichen lediglich Informationswege verknüpft, stellt die Betriebs-Datenservereinheit ADS eine zusätzlich mit der Organisation, Steuerung, Verwaltung und Wartung der gesamten Kommunikationsanlage betraute Systemeinheit dar.

Die dazu in der Betriebs-Datenservereinheit ADS implementierten Funktionen lassen sich in einem systembetriebstechnischen Funktionskomplex und in verschiedene optionale Datenanwendungsfunktionen unterteilen. Zu den systembetriebstechnischen Funktionen zählen z. B. das Inbetriebsetzen der Anlage, das Laden von Systemprogrammen, das Verteilen und Starten dieser Systemprogramme, das Aktivieren bzw. Deaktivieren von Systemfunktionen, sowie das Erfassen aller betrieblichen Veränderungen. In den Bereich der Datenanwendungsfunktionen fallen im wesentlichen Datentransportfunktionen für einen Transport verschiedenartiger Daten, wie Gebührendaten und Systemanwenderdateien zwischen der Kommunikationsanlage und anderen Datenbearbeitungssystemen, ebenso wie Datenerfassungsfunktionen, z.B. für eine Gebührenermittlung, oder für verkehrsstatistische Daten und Datenbearbeitungsfunktionen, z.B. für eine Aufbereitung von ermittelten Daten.

Für die Ausführung von Funktionen wird eine Vielzahl von Programmen bereitgehalten, die bei Bedarf abgearbeitet werden. Zur Verwaltung dieser Programme dient sowohl ein Echtzeit-Betriebssystem, das im wesentlichen die systemtechnikbezogenen Programme verwaltet, als auch ein Teilnehmer-Betriebssystem (Timesharing-Betriebssystem), dem die auf die Datenanwendungsfunktionen bezogenen Programme zugeordnet sind.

Der simultane Betrieb eines Echtzeit-Betriebssystems und eines Teilnehmer-Betriebssystems in einer Kommunikationsanlage ist aus der europäischen Patentanmeldung EP-A-0 333 123 bekannt.

Die Betriebs-Datenservereinheit ADS ist mit Speichereinrichtungen verbunden, in denen System- und Anwenderprogramme sowie verschiedenartige Daten, z.B. Gebührendaten und verkehrsstatistische Daten, gespeichert sind bzw. während des Betriebs der Anlage hinterlegt werden können. An die Betriebs-Datenservereinheit ADS sind des weiteren Bedienplätze, sogenannte Betriebsterminals BT, angeschlossen. Prinzipiell sind über ein Betriebsterminal BT Änderungen sämtlicher Konfigurationsdaten der gesamten Kommunikationsanlage möglich. Im wesentlichen werden jedoch über das Betriebsterminal BT Verwaltungs- und Wartungsaufgaben durchgeführt.

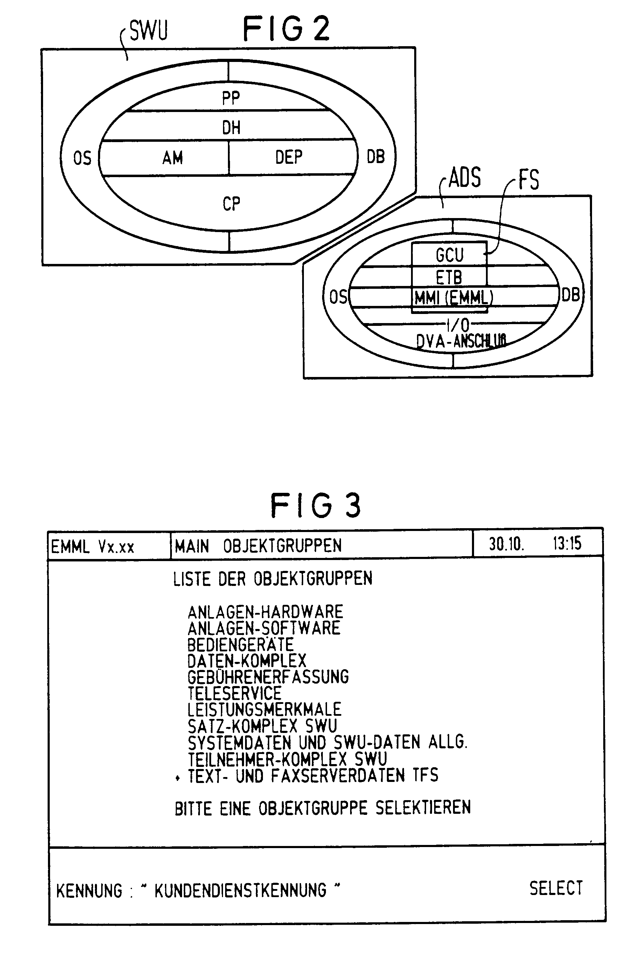

In FIG 2 ist anhand eines Schalenmodelles die Softwarearchitektur der Durchschalteeinheit SWU wie auch der Betriebs-Datenservereinheit ADS veranschaulicht. Unter der Verwaltung eines Betriebssystems OS nimmt die Durchschalteeinheit SWU die Funktionen der Vermittungssoftware, bestehend aus der Peripherietechnik PP, der Leitungstechnik DH und der Vermittlungstechnik CP war und beinhaltet zudem die die Sicherheitstechnik DEP und Betriebstechnik AM betreffenden Softwarekomplexe. Sämtliche Softwarekomplexe haben Zugriff auf eine Datenbasis DB, in der sämtliche veränderbare Konfigurationsdaten, d.h. Konfigurationsparameter, hinterlegt sind bzw. von der Software ausgelesen und eingetragen werden.

Die Betriebs-Datenservereinheit ADS steht mit der Software der Durchschalteeinheit SWU in enger Verbindung und weist ebenfalls von einem Betriebssystem OS verwaltete, der Vermittlungssoftware, der Sicherheitstechnik und der Betriebstechnik zugeordnete Softwarekomplexe (nicht dargestellt) auf. Zudem ist sie mit weiteren anwenderorientierten Softwarekomplexen versehen. So beinhaltet die Software der Betriebs- und Datenservereinheit ADS einen Komplex für Gebührenerfassung und -bearbeitung GCU, einen Softwarekomplex zur Realisierung eines elektronischen Telefonbuches ETB sowie einen Komplex zur Bildung einer Art Software-Schnittstelle MMI/EMML zur Umsetzung von bedieneraufgabenbezogenen Zugriffsanweisungen auf, von der Betriebstechnik AM ausführbare Einzelanweisungen. Diese software-Schnittstelle wird häufig Mensch-Maschinen-Interface MMI genannt.

Außerdem umfaßt die Betriebs-Datenservereinheit ADS die Steuerung der systemtechnischen Peripherie, z.B. der angeschlossenen Speichereinrichtungen und der Betriebsterminals BT, sowie die Steuerung und den Anschluß der Kommunikationsanlage an eine DVA-Anlage. Zur Hinterlegung der variablen Daten, d.h. der Konfigurationsparameter, für die Softwarekomplexe der Betriebs-Datenservereinheit ADS ist wiederum eine Datenbasis DB vorgesehen.

Es sei an dieser Stelle noch bemerkt, daß die in der FIGUR vorgenommene Trennung zwischen Softwarekomplexen innerhalb der Durchschalteeinheit SWU und der Betriebs-Datenservereinheit ADS im wesentlichen nur den modularen Aufbau der Software verdeutlichen soll. In der Praxis stehen die Softwarekomplexe der Durchschalteeinheit SWU und der Betriebs-Datenservereinheit ADS zueinander in enger Verbindung, insbesondere ist die Software-Schnittstelle MMI/EMML auch eine Schnittstelle zur Betriebstechnik AM der Durchschalteeinheit SWU, in deren Datenbasis DB somit auch über die Software-Schnittstelle MMI/EMML Veränderungen vorgenommen werden können.

Im weiteren wird davon ausgegangen, daß der Zugriff auf die in der Betriebs-Datenservereinheit ADS befindlichen Softwarekomplexe der Gebührenerfassung und -verarbeitung GCU, des elektronischen Datenbuchs ETB und der Software-Schnittstelle MMI/EMML einer kennungsorientierten Freigabesteuerung FS gemäß der Erfindung unterworfen sind.

Je nach Aufbaustufe der Kommunikationsanlage können zudem noch weitere Softwarekomplexe, z. B. für eine automatische Anrufverteilung (automatically call-distribution) und einer netzgesteuerten Konfiguration (network management-center), zum Konfigurieren einer Kommunikationsanlage über ein Kommunikationsnetz der kennungsorientierten Freigabesteuerung FS unterstellt werden.

In FIG 3 ist eine Bildschirmmaske dargestellt, die auf einem Bedienterminal BT zu Beginn einer Verwaltungs- oder Wartungssitzung erscheint. Einer Bedienperson wird, gesteuert durch die in der Betriebs-Datenservereinheit ADS befindliche Software-Schnittstelle MMI/EMML, ein nach Bedieneraufgaben gegliedertes Vorgehen ermöglicht. Die Softwareschnittstelle MMI/EMML sieht eine textunterstützte Bedienerführung vor und setzt eine von dem Bediener ausgewählte Bedieneraufgabe in eine Vielzahl von Einzelanweisungen, sogenannte AMO's (Administration Maintenance Order) um. Die wesentliche Aufgabe der Software-Schnittstelle MMI/EMML besteht damit darin, die Aufgaben, die ein Bediener an der Kommunikationsanlage ausführen möchte, als solche zu erfragen und in eine Sequenz von Einzelanweisungen (AMO's) zu übersetzen, die nach Programm- und Hardware-Strukturen orientiert sind, und in ihren einzelnen Funktionen, Wirkungen und Zusammenhängen nur von speziell geschultem Personal verstanden werden können. Jede der in der FIGUR aufgelisteten Objektgruppen läßt sich auswählen und in eine Vielzahl von bedieneraufgabenbezogenen Objektuntergruppen aufgliedern.

Zur funktionalen Klassifizierung können sämtliche von der Software-Schnittstelle MMI/EMML zur Verfügung gestellten bedieneraufgabenbezogenen Zugriffsanweisungen, sogenannten Zugriffsklassen, zugeordnet werden. In der Software-Schnittstelle MMI/EMML sind dazu spezielle Zuordnungsanweisungen vorgesehen, die ausschließlich einer eigenen Zugriffsklasse, die gewissermaßen eine privilegierte Zugriffsklasse darstellt, zugeordnet sind. Außerdem sind Zugriffsanweisungen, die ein Sperren und Freigeben von Leistungsmerkmalen der Kommunikationsanlage ermöglichen, ebenfalls ausschließlich einer eigenen Zugriffsklasse, die auch als privilegierte Zugriffsklasse bezeichnet werden kann, zugeordnet.

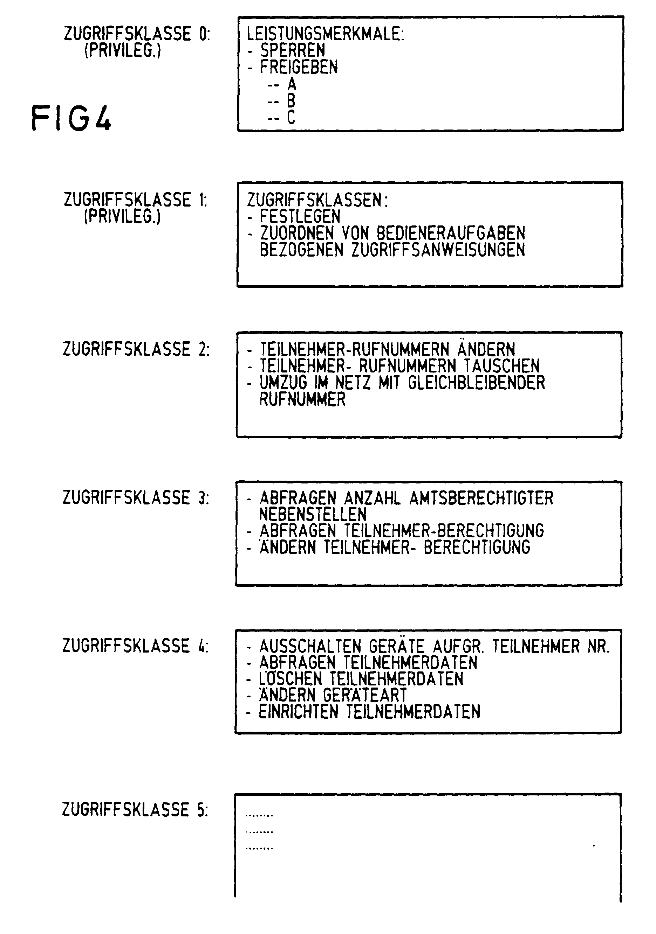

In FIG 4 soll die Zuordnung von Zugriffsanweisungen zu Zugriffsklassen anhand eines einfachen Beispiels aufgezeigt werden. Einer Zugriffsklasse 0, die im folgenden auch als erste privilegierte Zugriffsklasse bezeichnet wird, sind die Zugriffsanweisungen zugeordnet, die ein Sperren und Freigeben von Leistungsmerkmalen A,B,C ermöglichen. Einer Zugriffsklasse 1, die im weiteren auch als zweite privilegierte Zugriffsklasse bezeichnet wird, sind die Zuordnungsanweisungen zugeordnet, mit denen eine Zuordnung von Zugriffanweisungen zu Zugriffsklassen vorgenommen werden kann.

Einer weiteren Zugriffsklasse 2 sind z.B. Zugriffsanweisungen zugeordnet, die das Ändern und Tauschen von Teilnehmerrufnummern betreffen. Einer Zugriffsklasse 3 sind z.B. Zugriffsanweisungen zugeordnet, die das Abfragen der Anzahl amtsberechtigter Nebenstellen sowie das Abfragen und Ändern von Teilnehmerberechtigungen betreffen. Einer Zugriffsklasse 4 sind Zugriffsanweisungen zugeordnet, die unter anderem das Abfragen, Löschen und Einrichten von Teilnehmerdaten betreffen.

Zur selektiven Freigabesteuerung für bedieneraufgabenbezogene Zugriffsanweisungen sieht die Erfindung ein flexibles Verfahren vor, das an das Sicherheitsbedürfnis eines Anlagenbetreibers angepaßt werden kann, wodurch sich ein Sicherheitsspektrum abdecken läßt, das von einem bis zu einer beliebigen Anzahl von Berechtigten mit unterschiedlichen Zugriffsberechtigungen reicht. Jede Bedienperson, die an einem Bedienterminal BT der Kommunkationsanlage Verwaltungs- oder Wartungsaufgaben ausführen möchte, muß sich prinzipiell mit einer sogenannten Kennung gegenüber der Kommunikationsanlage identifizieren. In Abhängigkeit dieser Kennung sind die Bedienerpersonen jeweils zu unterschiedlichen Anlagenzugriffen berechtigt. Prinzipiell kann zu jeder Kennung ein Paßwort vorgesehen werden, das die Authentizität des die betreffende Kennung benutzenden Bedieners bestätigen soll.

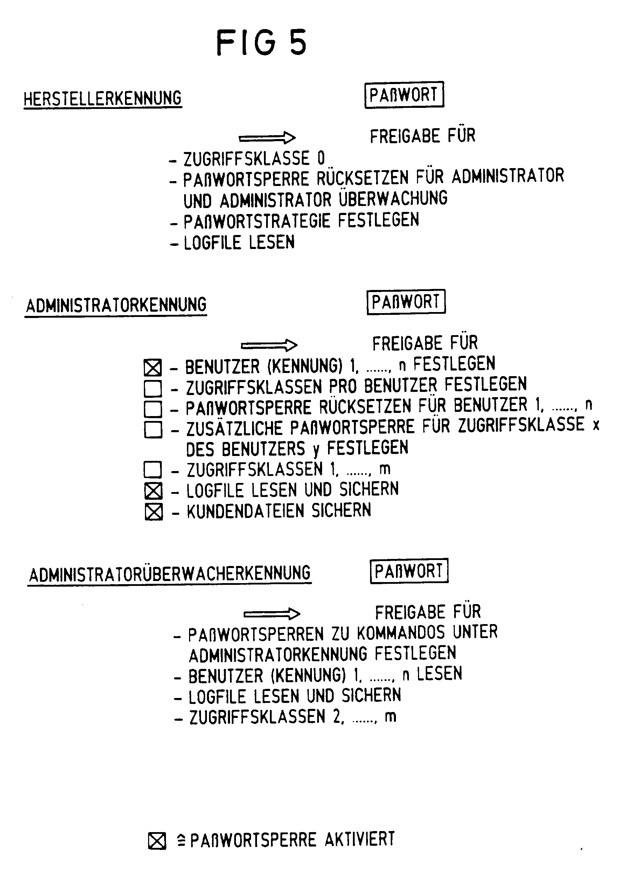

In FIG 5 sind die zur Administration der Freigabesteuerung dienenden 'Spezialkennungen' zusammen mit den durch sie jeweils freigegebenen Funktionen bzw. Zugriffen aufgeführt.

Eine der drei Spezialkennungen, die im folgenden als Administratorkennung bezeichnet wird, ist immer, also unabhängig vom Schutzbedürfnis des Anlagenbetreibers vorgesehen. Mit der Administratorkennung, die durch ein Paßwort vor Mißbrauch geschützt werden kann, wird eine Freigabe für die zur Administratorkennung gehörig aufgelisteten Funktionen erteilt. Sollen mehrere Benutzer dazu berechtigt werden, verwaltungs- und wartungstechnische Aufgaben auszuführen, so wird für die berechtigten Benutzer jeweils eine Benutzerkennung festgelegt, die in einer Benutzerkennungstabelle vermerkt wird. Mit der Administratorkennung ist die Benutzerkennungstabelle natürlich auch für Änderungen freigegeben.

Des weiteren berechtigt die Administratorkennung zu jeder in der Benutzerkennungstabelle festgelegten Benutzerkennung Zugriffsklassen zuzuordnen, die in einer Benutzerprofiltabelle als zu einer jeweiligen Benutzerkennung zugehörig vermerkt werden.

Mit der Administratorkennung können außerdem auch Paßwort-Sperren, die ein Benutzer zu seiner Benutzerkennung vorgesehen hat, rückgesetzt werden, wodurch die betreffende Paßwort-Sperre deaktiviert wird.

Unter der Administratorkennung kann auch zu jeder der einer jeweiligen Benutzerkennung zugeordneten Zugriffsklassen eine Freigabebedingung, z.B. eine Paßwort-Sperre, festgelegt werden. Mit einer Paßwort-Sperre erfolgt die Freigabe der betreffenden Zugriffsklasse nur dann, wenn ein anderer Benutzer - der mit dem Benutzer nicht identisch ist, unter dessen Benutzerkennung die Zugriffsklasse freigegeben werden soll - mit seinem Paßwort einer Freigabe zustimmt.

Weiterhin wird mit der Administratorkennung eine Freigabe für alle Zugriffsklassen, außer der Zugriffsklasse 0 (auch erste privilegierte Zugriffsklasse genannt), erteilt, d.h. daß alle den freigegebenen Zugriffsklassen zugeordneten Zugriffsanweisungen zur Verfügung stehen.

Die Administratorkennung berechtigt außerdem zum Lesen und Sichern einer Protokolldatei (Logfile), die vom Steuerungssystem der Kommunikationsanlage zyklisch erstellt wird, und in der wenigstens die während eines jeweiligen Zeitraumes mit den Spezialkennungen vorgenommenen Funktionen bzw. die Freigabesteuerung betreffenden Änderungen vermerkt werden.

Sind in der Kommunikationsanlage Kundendateien eingerichtet, dann berechtigt die Administratorkennung auch zur Abspeicherung dieser Kundendateien auf die an die Betriebs-Datenservereinheit ADS angeschlossenen Speichereinrichtungen.

Bei entsprechendem Sicherheitsbedürfnis kann eine weitere 'Spezialkennung', eine sogenannte Administratorüberwacherkennung eingerichtet werden, die im wesentichen zur Kontrolle der unter der Administratorkennung vorgenommenen Vorgänge dient. Die Administratorüberwacherkennung kann in der Praxis z.B. einem Arbeitnehmervertreter zugeordnet werden, der damit eine gewisse Kontrollfunktion ausüben kann.

Mit der Administratorüberwacherkennung, die selbstverständlich auch durch ein Paßwort geschützt werden kann, können die unter der Administratorkennung ausführbaren Vorgänge gezielt mit Freigabebedingungen z.B. Paßwortsperren, belegt werden. Mit einer Paßwortsperre wird ein Vorgang unter der Administratorkennung nur dann freigegeben, wenn das der Administratorüberwacherkennung zugehörige Paßwort eingegeben wird, d.h. daß für den vom Administrator beabsichtigten Vorgang der Administratorüberwacher seine Zustimmung geben muß. In der dargestellten FIGUR ist ein solcher Paßwortschutz beispielhaft für das Festlegen der Benutzerkennungen sowie für das Lesen und Sichern der Protokolldatei als auch für das Sichern der Kundendateien vorgesehen.

Mit der Administratorüberwacherkennung wird des weiteren auch eine Freigabe dafür erteilt, die in der Benutzerkennungstabelle vermerkten Benutzerkennungen zu lesen. Des weiteren wird mit der Administratorüberwacherkennung eine Freigabe für alle Zugriffsklassen, außer der Zugriffsklasse 0 und der Zugriffsklasse 1 (vgl. Fig 4) erteilt. Auch ein Lesen und ein Sichern der Protokolldateien ist freigegeben.

Mit einer weiteren 'Spezialkennung', einer sogenannten Herstellerkennung, die dem Anlagenbetreiber in der Regel nicht zugängist und im Regelfalle zur bei Inbetriebnahme und bei außergewöhnlichen Systemarbeiten und Umstellungen benutzt wird, wird eine Freigabe für die Zugriffsklasse 0 erteilt. Damit ist sichergestellt, daß nur der Hersteller selbst den Leistungsumfang der Kommunikationsanlage festlegen kann, und Leistungsmerkmale, die zwar softwaremäßig in der Anlage realisiert sind, vom Anlagenbetreiber jedoch nicht vertraglich erworben wurden, nicht ohne Kenntnis des Herstellers in Betrieb genommen werden können. Des weiteren ist mit der Herstellerkennung ein Rücksetzen der Paßwortsperren für die Administrator- und Administratorüberwacherkennung möglich, so daß z. B. bei Verlust des der Administratorkennung zugeordneten Paßwortes die Administratorkennung auch ohne Eingabe des zugeordneten Paßwortes zu den gewünschten Freigaben führt.

An dieser Stelle sei bemerkt, daß zu jeder Kennung, sofern mit ihr eine Freigabe bewirkt wurde, das bis zu diesem Zeitpunkt für diese Kennung geltende Paßwort geändert und die Paßwortsperre aktiviert oder deaktiviert werden kann. Letzteres bedeutet, daß die betreffende Kennung nicht paßwortgeschützt ist.

Mit der Herstellerkennung lassen sich des weiteren Paßwortstrategiemerkmale festlegen, insbesondere kann eingestellt werden, wieviele Zeichen (Buchstaben und Ziffern) eine Kennung aufweisen muß oder darf, oder wieviele Zeichen innerhalb eines Paßwortes gleich sein dürfen. Auch kann festgelegt werden, in welchen zeitlichen Abständen das Paßwort geändert werden muß, damit es seine Gültigkeit nicht verliert, und wieviele Fehlversuche bei einer Paßworteingabe zugelassen werden, bevor die betreffende Kennung gesperrt wird und wie lang diese Sperrzeit dann anhalten soll.

Mit der Herstellerkennung wird auch eine Freigabe für das Lesen der Protokolldatei erzielt. Ein Ändern oder Löschen der Protokolldatei ist mit der Herstellerkennung nicht vorgesehen; dadurch wird bewußt verhindert, daß unter der Herstellerkennung vorgenommene Aktivitäten, die in der Protokolldatei aufgezeichnet werden, durch nachträgliches Abändern der Protokolldatei vertuscht werden können und damit nicht mehr nachweisbar bzw. nachvollziehbar wären.

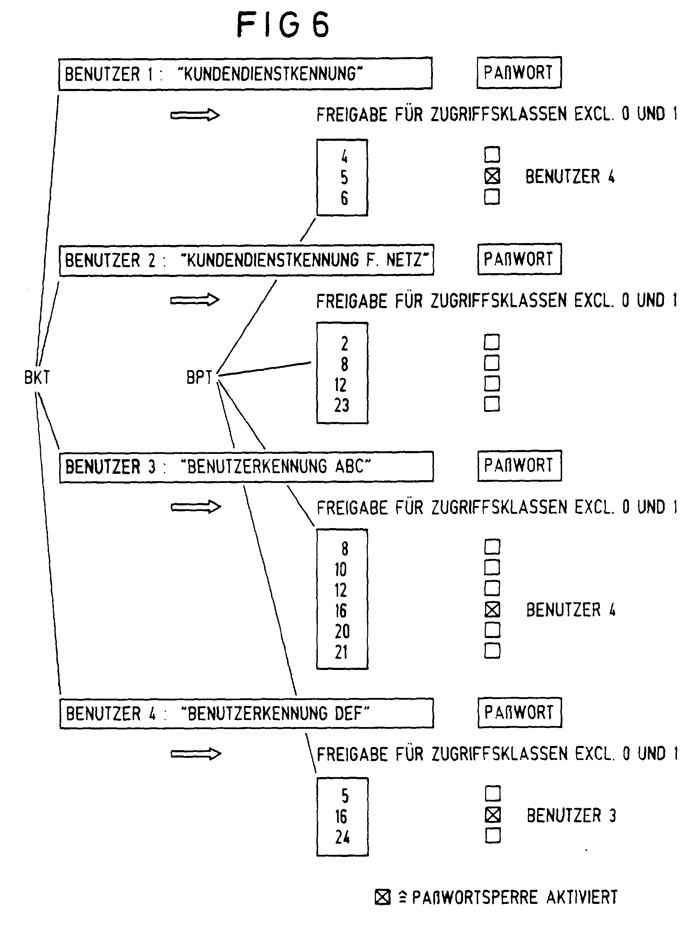

In FIG 6 wird zur Veranschaulichung anhand eines Beispiels eine Zuordnung von Zugriffsklassen zu mehreren Benutzerkennungen dargestellt. Die Bildung von Benutzerkennungen wird natürlich nur dann vorgenommen, wenn die Sicherheitsbelange des Anlagenbetreibers es erfordern oder zulassen, mehrere Bedienerpersonen mit verwaltungs- und wartungsbezogenen Aufgaben zu betrauen. In der Darstellung der FIGUR sind insgesamt vier Benutzer vorgesehen, denen jeweils eine Benutzerkennung individuell zugeordnet ist. Diese Kennungen sind in einer Benutzerkennungstabelle BKT vermerkt. Wie bereits im Zusammenhang mit den 'Spezialkennungen' erwähnt, kann für jede Kennung eine Paßwortsperre aktiviert werden. Jede der Benutzerkennungen führt zur Freigabe von Zugriffsklassen, (d.h. zur Freigabe von den betreffenden Zugriffsklassen zugeordneten Zugriffsanweisungen), die zu jeder Benutzerkennung gehörig in einer Benutzerprofiltabelle BPT vermerkt sind. Zum Beispiel ist für die "Kundendienstkennung" eine Freigabe für die Zugriffsklasse 4, 5 und 6 vorgesehen. Eine Freigabe für die Zugriffsklassen 0 oder 1 ist mit Benutzerkennungen generell nicht möglich.

Jede der in der Benutzerprofiltabelle BPT zu einer jeweiligen Benutzerkennung vermerkten Zugriffsklassen ist mit einer Paßwortsperre versehbar, die unter der Administratorkennung festgelegt werden kann. Damit ist eine Freigabe der betreffenden Zugriffsklasse nur dann möglich, wenn das einer anderen Kennung zugeordnete Paßwort zusätzlich eingegeben wird. Im vorliegenden Beispiel ist eine Freigabe der Zugriffsklasse 5 unter der "Kundendienstkennung" nur möglich, wenn das vom Benutzer 4 gewählte Paßwort zusätzlich eingegeben wird. Eine Freigabe der Zugriffsklassen 4 und 6 erfolgt dagegen ohne zusätzliches Paßwort.

## Patentansprüche

1. Verfahren zur hierarchisch administrierbaren kennungsorientierten Freigabesteuerung für bedieneraufgabenbezogene Zugriffsanweisungen auf in einer Datenbasis (DB) einer programmgesteuerten Kommunikationsanlage gespeicherte verwaltungs- und wartungsbezogene Systemkonfigurationsdaten, wobei die Zugriffsanweisungen an einem Betriebsterminal (BT) veranlaßt und jeweils in Form einer Abfolge von Einzelanweisungen von der Kommunikationsanlage ausgeführt werden, und die Zugriffsanweisungen im Sinne einer funktionalen Zugriffsklassifizierung jeweils einer oder mehreren Zugriffsklassen zuordenbar sind; als Kennungen sind:
- eine Administratorkennung vorgesehen, mit der eine Zugriffsfreigabe auf die Zugriffsklassen und eine Freigabe zur Änderung
-- einer Benutzerkennungstabelle (BKT), in der zugriffsberechtigte Benutzerkennungen vermerkbar sind, und
-- einer Benutzerprofiltabelle (BPT) erfolgen, in der für diese Benutzerkennungen jeweils freigegebene Zugriffsklassen vermerkbar sind,
- eine Administrator-Überwacherkennung vorsehbar, mit der eine Freigabe zur Einstellung von Freigabebedingungen erfolgt, unter denen die mit der Administratorkennung jeweils ausführbaren Änderungen freigegeben werden,
- eine Herstellerkennung vorsehbar, mit der eine Zugriffsfreigabe für eine erste privilegierte Zugriffsklasse erfolgt, der den Leistungsumfang der programmgesteuerten Kommunikationsanlage einstellende Zugriffsanweisungen zugeordnet sind,
- sowie Benutzerkennungen vorsehbar, mit denen eine Zugriffsfreigabe auf die in der Benutzerprofiltabelle für eine jeweilige Benutzerkennung als freigegeben vermerkten Zugriffsklassen erfolgt.

2. Verfahren nach Anspruch 1,
**dadurch gekennzeichnet**,
daß mit der Herstellerkennung eine Freigabe zum
- Löschen von die Administrator- und Administratorüberwacherkennung betreffenden Paßwörtern und
- zur Einstellung von Paßwortstrategiemerkmalen erfolgt.

3. Verfahren nach Anspruch 1 oder 2,
**dadurch gekennzeichnet**,
daß ausschließlich mit der Herstellerkennung eine Freigabe der ersten privilegierten Zugriffsklasse erfolgt.

4. Verfahren nach einem der vorhergehenden Ansprüche,
**dadurch gekennzeichnet**,
daß einer zweiten privilegierten Zugriffsklasse Änderungen der Zuordnung von Zugriffsanweisungen zu Zugriffsklassen bewirkende Zugriffsanweisungen zugeordnet sind.

5. Verfahren nach Anspruch 4,
**dadurch gekennzeichnet,**
daß ausschließlich mit der Administratorkennung eine Freigabe der zweiten privilegierten Zugriffsklasse erfolgt.

6. Verfahren nach einem der vorhergehenden Ansprüche,
**dadurch gekennzeichnet**,
daß mit der Administratorkennung eine Freigabe zur Einstellung von Freigabebedingungen erfolgt, unter denen mit einer jeweiligen Benutzerkennung ein Zugriff auf eine jeweilige Zugriffsklasse freigegeben wird.

7. Verfahren nach Anspruch 6,
**dadurch gekennzeichnet,**
daß als Freigabebedingung unter denen ein Zugriff auf eine jeweilige Zugriffsklasse erfolgt, ein einer anderen Benutzerkennung zugeordnetes Paßwort dient.

8. Verfahren nach einem der vorhergehenden Ansprüche,
**dadurch gekennzeichnet**,
daß mit der Administratorkennung eine Freigabe zum Rücksetzen von Paßwörtern der Benutzerkennungen erfolgt.

9. Verfahren nach einem der vorhergehenden Ansprüche,
**dadurch gekennzeichnet**,
daß als Freigabebedingung für mit der Administratorkennung jeweils ausführbaren Änderungen ein der Administrator-Überwacherkennung zugehöriges Paßwort dient.

10. Verfahren nach einem der vorhergehenden Ansprüche,
**dadurch gekennzeichnet**,
daß vom Steuerungssystem der Kommunikationsanlage eine zyklische Protokolldatei erstellt wird, in der wenigstens die während eines jeweiligen Zeitraumes mit der Administrator- und/oder Administratorüberwacher- und/oder Hersteller- und/oder Benutzerkennung vorgenommenen Änderungen vermerkt werden.

## Claims

1. Method for hierarchically managed identification-oriented enabling control for access instructions which are related to user tasks for access to system configuration data which relate to management and maintenance and are stored in a database (DB) of a program-controlled communication system, the access instructions being brought about at an operating terminal (BT) and each being executed in the form of a sequence of individual instructions from the communication system, and it being possible to assign the access instructions, in terms of a functional access classification, to one or more access classes in each case; provided as identifications are:
- an administrator identification with which an access enable to the access classes and an enable for modifying
-- a user identification table (BKT) in which access-authorized user identifications can be noted, and
-- a user profile table (BPT) in which access classes which are respectively enabled for these user identifications can be noted, are effected,
it is possible for the identifications provided to be:
- an administrator monitoring identification with which an enable for setting enable conditions, under which the modifications which can be respectively carried out using the administrator identification are enabled, is effected,
- a manufacturer identification with which an access enable for a first privileged access class, to which access instructions which set the scope of performance of the program-controlled communication system are assigned, is effected,
- as well as user identifications with which an access enable for access to the access classes noted as enabled in the user profile table for a respective user identification is effected.

2. Method according to Claim 1, characterized in that an enable for
- clearing passwords which relate to the administrator identification and administrator monitoring identification and
- for setting password strategy features is effected using the manufacturer identification.

3. Method according to Claim 1 or 2, characterized in that an enable of the first privileged access class is effected exclusively using the manufacturer identification.

4. Method according to one of the preceding claims, characterized in that modifications in the access instructions which bring about the assignment of access instructions to access classes are assigned to a second privileged access class.

5. Method according to Claim 4, characterized in that an enable of the second privileged access class is effected exclusively using the administrator identification.

6. Method according to one of the preceding claims, characterized in that an enable for setting enable conditions, under which an access to a respective access class is enabled using a respective user identification, is effected using the administrator identification.

7. Method according to Claim 6, characterized in that a password which is assigned to another user identification serves as an enable condition under which an access to a respective access class is effected.

8. Method according to one of the preceding claims, characterized in that an enable for resetting passwords of the user identifications is effected using the administrator identification.

9. Method according to one of the preceding claims, characterized in that a password which is associated with the administrator monitoring identification serves as an enable condition for modifications which can be respectively carried out using the administrator identification.

10. Method according to one of the preceding claims, characterized in that a cyclical protocol file is created by the control system of the communication system, in which protocol file at least the modifications performed during a respective time period using the administrator identification and/or administrator monitoring identification and/or manufacturer identification and/or user identification are noted.

## Revendications

1. Procédé de commande, d'une manière pouvant être gérée hiérarchiquement, et par identifications, de la libération d'instructions d'accès, qui se rapportent à des tâches d'utilisateurs, à des données de configuration du système, qui se rapportent à la gestion et à la maintenance et qui sont mémorisées dans une base de données (DB) d'une installation de communication commandée par programme, les instructions d'accès étant déclenchées sur un terminal de service (BT) et étant exécutées chacune sous la forme d'une séquence d'instructions individuelles par l'installation de communication, et les instructions d'accès pouvant être associées, en vue d'une classification fonctionnelle d'accès, à une ou plusieurs classes d'accès; et en tant qu'identifications, on prévoit :
- une identification de gestionnaire, à l'aide de laquelle on effectue une libération d'accès aux classes d'accès et une libération destinée à modifier
-- un tableau (BKT) d'identifications d'utilisateurs, dans lequel on peut mentionner des identifications d'utilisateurs ayant une autorisation d'accès, et
-- un tableau (BPT) de profils d'utilisateurs, dans lequel on peut mentionner des classes d'accès libérées pour ces identifications d'utilisateurs,
- on peut prévoir une identification de contrôleur de gestionnaire, par laquelle on effectue une libération permettant d'établir des conditions de libération, dans lesquelles on libère les modifications, pouvant être respectivement effectuées par l'identification du gestionnaire,
- on peut prévoir une identification de fabricant, par laquelle on effectue une libération d'accès pour une première classe d'accès privilégiée, à laquelle sont associées des instructions d'accès, qui règlent l'ensemble des performances de l'installation de communication commandée par programme, et
- on peut prévoir des identifications d'utilisateurs, par lesquelles on effectue une libération d'accès aux classes d'accès mentionnées comme étant libérées dans le tableau de profils d'utilisateurs pour une identification d'utilisateur.

2. Procédé suivant la revendication 1, caractérisé par le fait que l'on effectue une libération pour
- effacer des mots de passe concernant l'identification du gestionnaire et du contrôleur de gestionnaire, et pour
- le réglage de caractéristiques d'une stratégie à mots de passe,
avec l'identification de fabricant.

3. Procédé suivant la revendication 1 ou 2, caractérisé par le fait que l'on effectue une libération de la première classe d'accès privilégié exclusivement avec l'identification de fabricant.

4. Procédé suivant l'une des revendications précédentes, caractérisé par le fait qu'à une seconde classe d'accès privilégiée sont associées des instructions d'accès qui déclenchent des modifications de l'association d'instructions d'accès à des classes d'accès.

5. Procédé suivant la revendication 4, caractérisé par le fait que l'on effectue une libération de la seconde classe d'accès privilégiée exclusivement par l'identification du gestionnaire.

6. Procédé suivant l'une des revendications précédentes, caractérisé en ce que l'on effectue par l'identification du gestionnaire une libération destinée à établir des conditions de libération, dans lesquelles on libère un accès à une classe d'accès par une identification d'utilisateur.

7. Procédé suivant la revendication 6, caractérisé par le fait qu'on utilise un mot de passe associé à une autre identification d'utilisateur, en tant que condition de libération, dans laquelle on effectue un accès à une classe d'accès.

8. Procédé suivant l'une des revendications précédentes, caractérisé par le fait que l'on effectue une libération pour ramener à l'état initial des mots de passe des identifications d'utilisateurs, par l'identification de gestionnaire.

9. Procédé suivant l'une des revendications précédentes, caractérisé par le fait qu'on utilise un mot de passe appartenant à l'identification du contrôleur de gestionnaire comme condition de libération pour des modifications pouvant être effectuées au moyen de l'identification de gestionnaire.

10. Procédé suivant l'une des revendications précédentes, caractérisé par le fait qu'on établit par le système de commande de l'installation de communication un fichier cyclique de listage, dans lequel on mentionne au moins les modifications effectuées pendant un intervalle de temps avec l'identification de gestionnaire et/ou l'identification de contrôleur de gestionnaire et/ou l'identification de fabricant et/ou l'identification d'utilisateur.
